(19) **Europäisches Patentamt**

**European Patent Office**

**Office européen des brevets**

(11) **EP 1 513 056 B1**

(12) **EUROPÄISCHE PATENTSCHRIFT**

(45) Veröffentlichungstag und Bekanntmachung des Hinweises auf die Patenterteilung:
**22.11.2006 Patentblatt 2006/47**

(51) Int Cl.:
***G06F 3/033*** *(2006.01)*

(21) Anmeldenummer: **04028345.9**

(22) Anmeldetag: **18.09.2002**

(54) **3D-Eingabegerät mit integrierter Anzeigevorrichtung**

Three-dimensional integrated touch screen input apparatus

Appareil d'entrée 3 D à écran tactile intégré

(84) Benannte Vertragsstaaten:
**CH FR GB IT LI**

(30) Priorität: **21.09.2001 DE 10146471**

(43) Veröffentlichungstag der Anmeldung:
**09.03.2005 Patentblatt 2005/10**

(62) Dokumentnummer(n) der früheren Anmeldung(en) nach Art. 76 EPÜ:
**02799410.2 / 1 428 110**

(73) Patentinhaber: **3Dconnexion GmbH**
**82229 Seefeld (DE)**

(72) Erfinder:
• **Gombert, Bernd**
**82229 Seefeld (DE)**
• **von Prittwitz, Bernhard**
**82229 Seefeld (DE)**

(74) Vertreter: **Rupp, Christian et al**
**Mitscherlich & Partner**
**Patent- und Rechtsanwälte**
**Sonnenstrasse 33**
**80331 München (DE)**

(56) Entgegenhaltungen:
**EP-A- 0 685 953**   **EP-A- 0 979 990**
**WO-A-96/01977**   **US-A- 4 739 128**
**US-A- 5 995 104**

**Beschreibung**

Die Erfindung bezieht sich auf ein in drei Dimensionen bewegliches, von Hand zu bedienendes Eingabe- und Steuergerät.

Da die zugrunde liegende Erfindung vorteilhaft im Bereich der Steuerung virtueller und/oder realer Objekte eingesetzt werden kann, soll im Folgenden auf die nach dem heutigen Stand der Technik gebräuchlichen Hilfsmittel zur Eingabe von Information, die zur Steuerung von Objekten im Bereich von Virtual Reality (VR)-Applikationen eingesetzt werden, kurz eingegangen werden. Anwendungsfälle für reale Objekte sind bspw. Roboter oder aber auch Elektro- bzw. Elektronikgeräte im Haushalt, wenn das 3D-Eingabegerät in der Art einer Fernbedienung verwendet wird. Weitere Anwendungsfälle gibt es bspw. im Automobilbereich (Verstellung elektrischer Sitze, Aussenspiegel).

Herkömmliche Eingabesysteme wie Tastaturen, Mäuse, Trackballs und Joysticks sind heute weit verbreitet. Sie werden verwendet, um Positionsmarken (engl.: "Cursors"), Mauszeiger etc. zu steuern, um beispielsweise durch eine virtuelle Szene navigieren zu können oder virtuelle Objekte auf dem Bildschirm bzw. reale Objekte zu bewegen.

Mit einem Touchscreen ist es möglich, direkt auf Objekte, die auf dem Bildschirm abgebildet sind, mit dem Finger zu zeigen, ohne weitere platzraubende Zusatzgeräte auf dem Schreibtisch zu benötigen. Niedrig auflösende Touchscreens weisen 10 bis 50 Positionen in waagerechter und senkrechter Richtung auf und benutzen eine horizontale und vertikale Reihe von Infrarot-Leuchtdioden und Fotosensoren, um ein Gitter von unsichtbaren Lichtstrahlen unmittelbar vor dem Bildschirm aufzubauen. Bei einer Berührung des Bildschirms werden sowohl vertikale als auch horizontale Lichtstrahlen unterbrochen. Ausgehend von dieser Information, kann die aktuelle Fingerposition ermittelt werden.

Eine andere bekannte Ausführungsform berührungssensitiver Informationseingabegeräte ist das kapazitiv gekoppelte Touch-Panel. Dieses liefert eine Auflösung von ca. 100 Positionen in jeder Richtung. Wenn ein Benutzer die leitfähig beschichtete Glasplatte des Touch-Panels mit einem Finger berührt, kann aufgrund der Impedanzänderung die aktuelle Fingerposition ermittelt werden. Andere hochauflösende Panels verwenden zwei minimal voneinander entfernte, transparente Schichten. Eine davon ist leitfähig beschichtet, die andere mit einem Widerstandsmaterial beschichtet. Durch den Anpressdruck des Fingers berühren sich diese beiden Lagen und durch Messung des daraus resultierenden Spannungsabfalls kann dann die aktuelle Fingerposition ermittelt werden. Eine niedriger auflösende und billigere Variante dieser Technologie verwendet anstelle dieser Schichten ein Gitter von feinen Drähten.

Nach dem Stand der Technik sind heute verschiedene Lösungen für das Problem der Echtzeit-Bewegungssteuerung virtueller Objekte verfügbar, wobei jede dieser Lösungen für einen speziellen Anwendungszweck optimiert ist. Mit jeder dieser Lösungen sind daher bestimmte Einschränkungen verbunden. Um einige der wichtigsten dieser Lösungen ansatzweise erklären zu können, ist es notwendig, kurz auf ihre wichtigsten Merkmale einzugehen.

Eine Möglichkeit zur Echtzeit-Bewegungssteuerung virtueller Objekte hat sich in letzter Zeit durch die Entwicklung von Eingabegeräten für Computer ergeben, die die gleichzeitige Eingabe von Ansteuersignalen mehrerer, voneinander unabhängiger Freiheitsgrade ermöglichen. Die dadurch geschaffenen Möglichkeiten übersteigen bei weitem diejenigen, die beispielsweise bei der Verwendung einer Maus bestehen, die lediglich zweidimensional (z.B. auf der Ablagefläche eines Schreibtischs) gesteuert werden kann. Zwar ist es auch bekannt, eine Maus beispielsweise mit zusätzlichen Schaltern zu versehen, indessen haben diese Schalter den Nachteil, dass sie nicht die Eingabe von Analogdaten ermöglichen, sondern vielmehr auf Binärdaten (Ein/Aus) beschränkt sind.

Aus dem Stand der Technik sind auch verschiedene Eingabegeräte bekannt, die analoge Ansteuersignale mit verschiedenen, voneinander unabhängigen Freiheitsgraden erzeugen können, wobei jedes dieser Analogsignale somit als Parameterwert bei einer Steuerung virtueller Objekte verwendet werden kann. Derartige manuell steuerbare Eingabesysteme, die eine Navigation in drei Dimensionen erlauben, werden heute in einer Reihe der unterschiedlichsten technischen Anwendungsfelder erfolgreich eingesetzt.

Beispielsweise ist aus der Patentschrift US-A-5,757,360 ein eiförmiges Eingabegerät für Computer bekannt, das durch eine Hand des Benutzers frei im Raum bewegt werden kann, seine momentanen Positionen, Bewegungsrichtungen, Geschwindigkeiten und Beschleunigungen ermittelt und diese kinematischen Daten drahtlos zu einem Computer überträgt. Dabei wird ein analoger Bewegungsablauf in Form eines Bewegungsmusters identifiziert, woraus Bewegungsbefehle abgeleitet und in eine animierte Grafikdarstellung umgesetzt werden. Die Bewegungsmuster werden mit Hilfe eines Mustererkennungsalgorithmus automatisch erkannt. Zusätzlich werden Steuerbefehle erzeugt. Der Nachteil dieses Verfahrens besteht darin, dass es nicht frei spezifizierbar ist, da Bewegungsabläufe des Benutzers, die durch das Eingabegerät analog erfasst werden, korrespondierenden Bewegungsabläufen von gespeicherten Bewegungssequenzen einer animierten Grafikdarstellung zugeordnet werden und nur als solche dargestellt werden können.

Eingabegeräte, die über manuell zu betätigende Kraft-Momenten-Sensoren verfügen, sind beispielsweise aus den Patentschriften DE 36 11 336 C2, DE 37 64 287 sowie EP 0 979 990 A2 bekannt.

Aus der zuletzt genannten europäischen Patentschrift EP 0 979 990 A2 ist bekannt, einen derartigen Kraft-Momenten-Sensor zum Steuern von Bedienelementen eines realen oder virtuellen Misch- bzw. Steuerpults zu verwenden, beispielsweise um neuartige Farb-, Licht- und/oder Tonkompositionen zu kreieren und zu gestalten. Hierbei kann in vorteilhafter Weise die intuitive räumliche Steuerung in drei translatorischen sowie drei rotatorischen Freiheitsgraden auf ein stufenloses räumliches Mischen oder Steuern einer großen Anzahl von optischen und/oder akustischen Parametern übertragen werden. Zur Steuerung wird auf die Bedienoberfläche des Eingabegeräts ein Druck ausgeübt und dadurch ein Impuls erzeugt, der mit Hilfe des Kraft-Momenten-Sensors erfasst und in ein aus einem Kraft- und einem Momentenvektor bestehendes Vektorpaar umgesetzt wird. Werden dabei bestimmte charakteristische Impulsvorgaben erfüllt, kann beispielsweise eine objektspezifische Steueroperation und/oder eine technische Funktion durch Schalten in einen Aktivierungszustand ausgelöst bzw. durch Schalten in einen Deaktivierungszustand wieder beendet werden.

Aus dieser Druckschrift ist weiterhin bekannt, den besagten Kraft-Momenten-Sensor als Bedienelement eines 3D-Eingabegeräts seitlich an einem Touchscreen anzubringen, so dass die Längsachse des Bedienelements parallel zu der Anzeige- und Bedienfläche des Touchscreens liegt. Damit ist jedoch der Nachteil verbunden, das die Blickrichtung auf den Touchscreen nicht mit der Längsachse des Bedienelements zusammenfällt. Das hat zur Folge, dass die Hand-Augen-Koordination des Benutzers erschwert wird, da die Richtungen von Steuerbewegungen des Bedienelements und angezeigten Objektbewegungen auf dem Bildschirm bei ungünstiger Achsenbelegung des Bedienelements nicht übereinstimmen.

Aus der G 298 04 023 ist ein halbkugelförmiges Eingabegerät mit Drucktasten zur Ansteuerung von Synthesizern oder MIDI-Controllern bekannt.

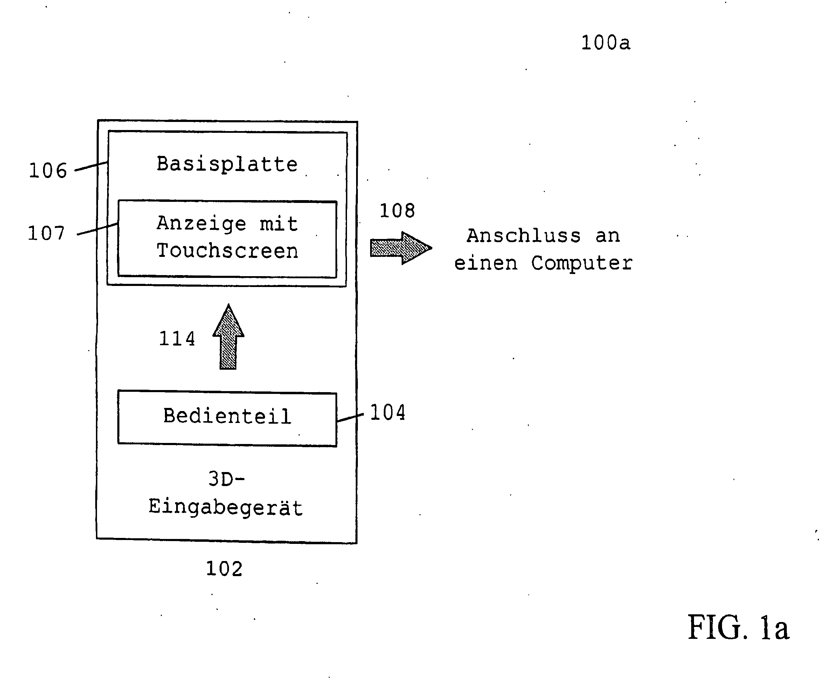

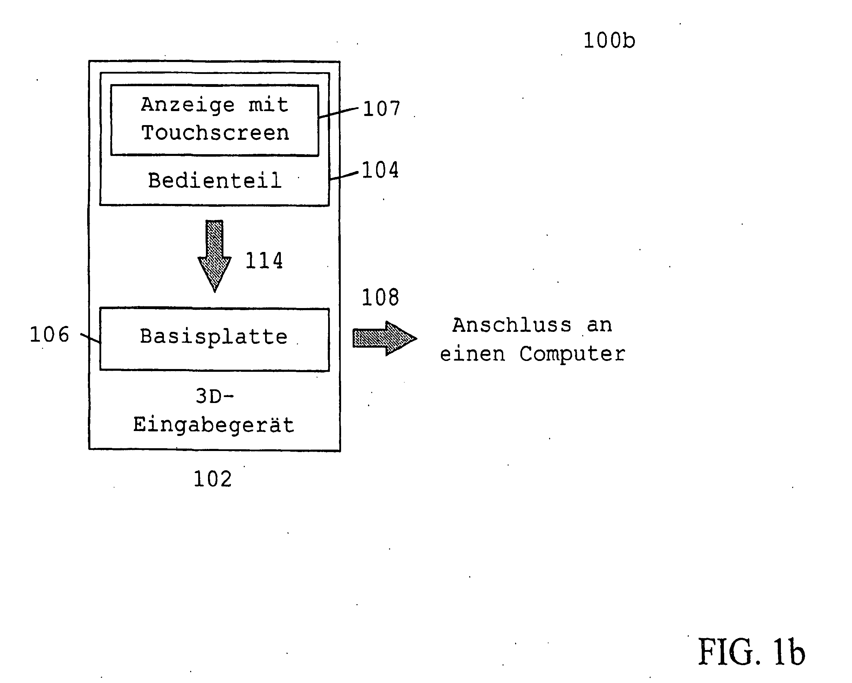

US 5,995,104 zeigt eine Anzeigevorrichtung, auf der mehrere Menüdarstellungen dreidimensional angezeigt werden können. Die Anzeige wird ausgehend von zwei Joysticks angesteuert. Die Anzeigevorrichtung ist indessen im Gegensatz zur vorliegenden Erfindung nicht in das Eingabegerät (Joystick) integriert, sondern vielmehr mittels eines Kabels (Bezugszeichen 50 in Fig. 1) mit diesem verbunden.

Aus der WO 96/01977 ist eine Technik zur Steuerung und Programmierung beispielsweise eines Roboters bekannt. Gemäß dem Ausführungsbeispiel von Fig. 9 ist dabei ein Eingabegerät vorgesehen, das eine Anzeigevorrichtung, wie beispielsweise ein LCD-Display vergleichbar zur vorliegenden Erfindung aufweist.

AUFGABE DER VORLIEGENDEN ERFINDUNG

Ausgehend von dem oben genannten Stand der Technik, widmet sich die vorliegende Erfindung der Aufgabe, ein komfortables programmierbares Eingabegerät bereitzustellen, mit dessen Hilfe dem Anwender eine interaktive, intuitive Bewegungssteuerung virtueller Objekte in Echtzeit ermöglicht und gleichzeitig die Koordination von Hand und Augen verbessert wird. Insbesondere soll die Programmierung dieses Eingabegeräts vereinfacht werden, ohne dass eine Progammierung über Menüs eines computergesteuerten Konfigurationsprogramms nötig ist.

Diese Aufgabe wird erfindungsgemäß durch die Merkmale des unabhängigen Anspruchs gelöst. Vorteilhafte Ausführungsbeispiele, die den Gedanken der Erfindung weiterbilden, sind in den abhängigen Ansprüchen definiert.

KURZBESCHREIBUNG DER ZEICHNUNGEN

Weitere Eigenschaften, Merkmale, Vorteile und Zweckmäßigkeiten der zugrunde liegenden Erfindung resultieren aus den untergeordneten abhängigen Ansprüchen sowie aus der folgenden Beschreibung der bevorzugten Ausführungsbeispiele der Erfindung, welche in den folgenden Zeichnungen abgebildet sind. Hierin zeigen:

FIG. 1a ein vereinfachtes Blockdiagramm 100a nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist,

FIG. 1b ein vereinfachtes Blockdiagramm 100b nach einem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist,

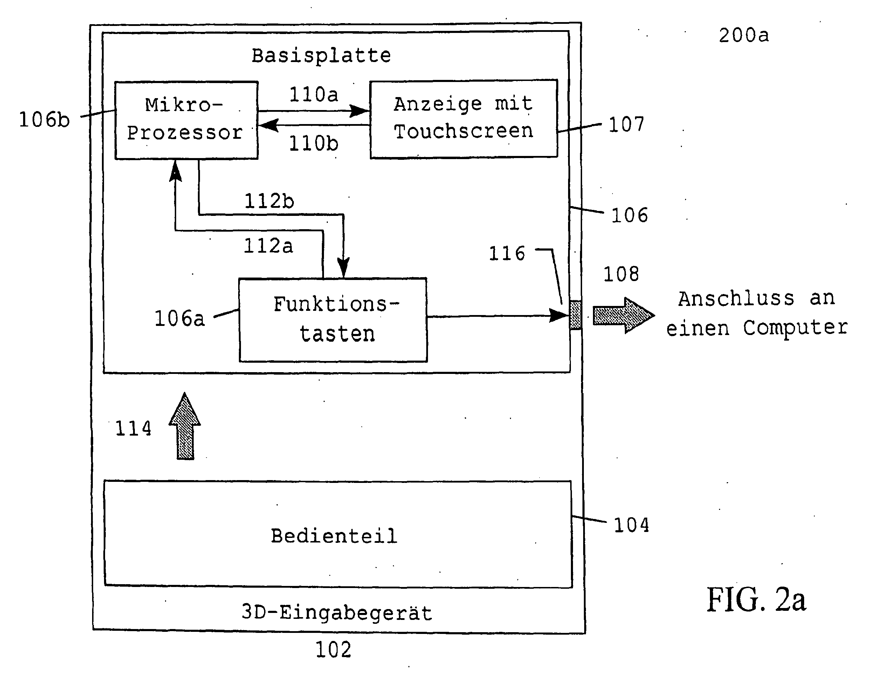

FIG. 2a ein detailliertes Blockdiagramm 200a zur Veranschaulichung der Komponenten des 3D-Eingabegeräts 102 sowie der zwischen diesen Komponenten ausgetauschten Signale 110a+b und 112a+b nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist,

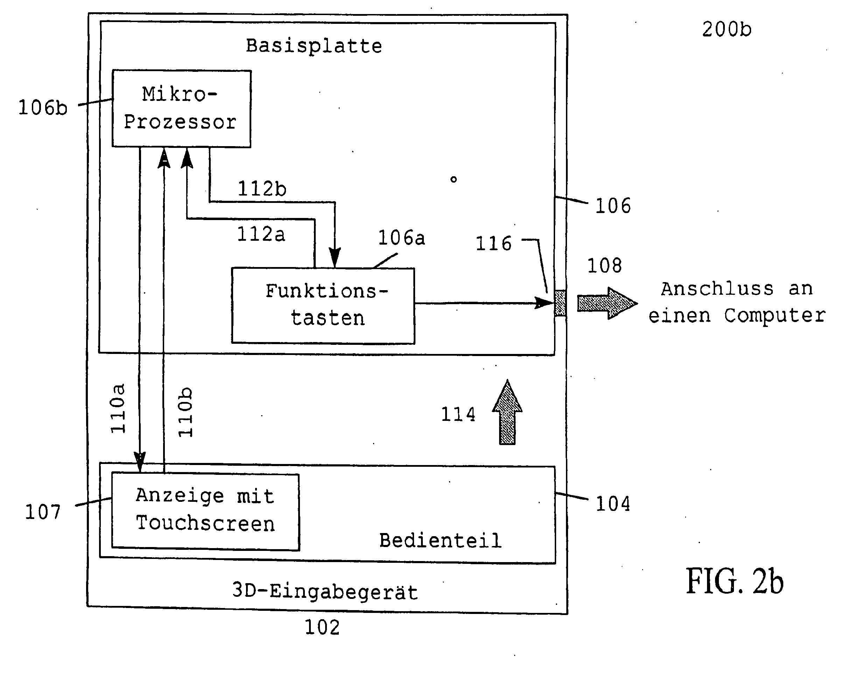

FIG. 2b ein detailliertes Blockdiagramm 200b zur Veranschaulichung der Komponenten des 3D-Eingabegeräts 102 sowie der zwischen diesen Komponenten ausgetauschten Signale 110a+b und 112a+b nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist,

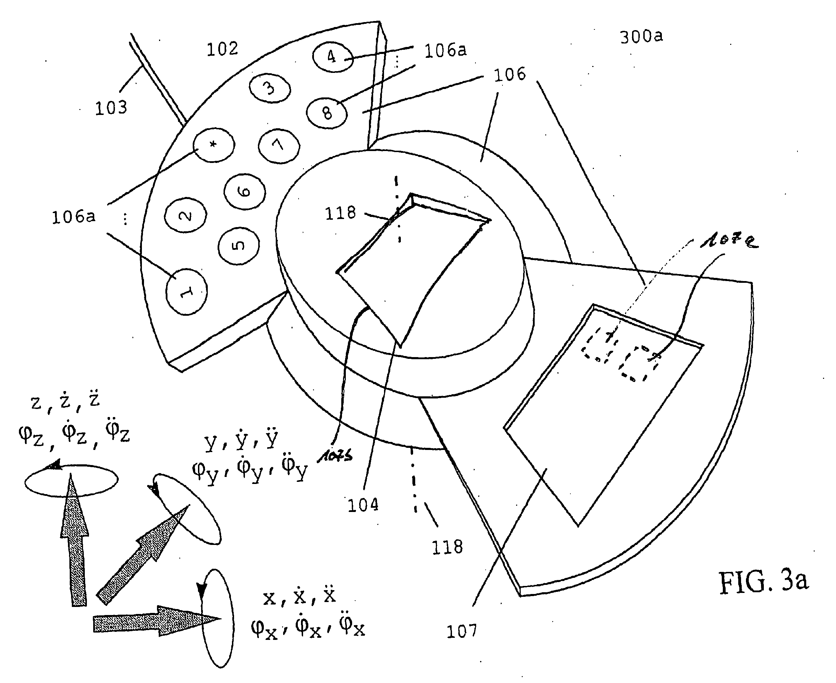

FIG. 3a eine dreidimensionale Ansicht 300a des 3D-Eingabegeräts 102 nach dem bevorzugten ersten Ausführungsbeispiel der zugrunde liegenden Erfindung, bei dem eine Anzeigevorrichtung mit Touchscreen 107 in die Oberseite der Basisplatte 106 vom 3D-Eingabegerät 102 integriert ist, mit einem Koordinatensystem, in dem die sechs Freiheitsgrade x,y,z und $\varphi_x,\varphi_y,\varphi_z$ des 3D-Eingabegeräts und deren erste und zweite zeitliche Ableitungen $\dot{x}, \dot{y}, \dot{z}$ und $\dot{\varphi}_x, \dot{\varphi}_y, \dot{\varphi}_z$ sowie $\ddot{x},\ddot{y},\ddot{z}$ und $\ddot{\varphi}_x, \ddot{\varphi}_y, \ddot{\varphi}_z$ eingezeichnet sind,

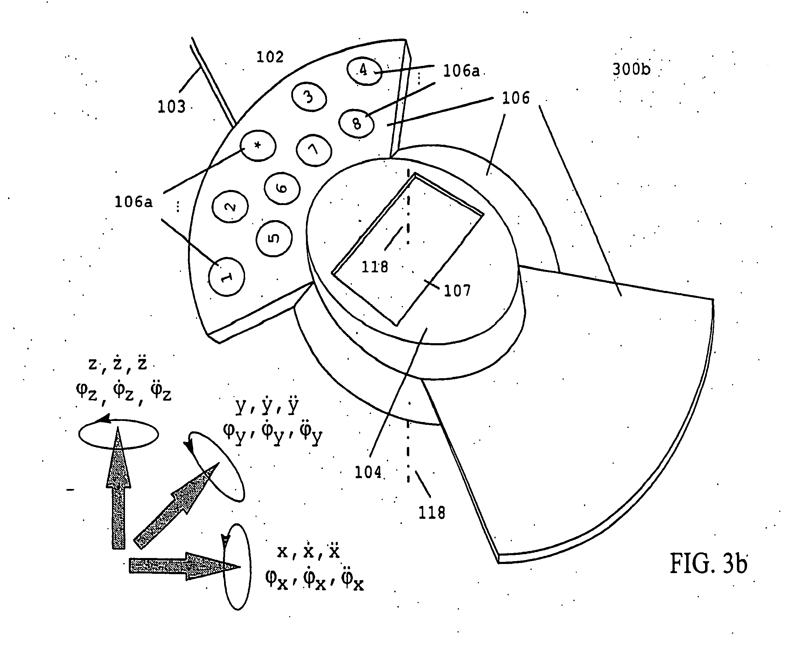

FIG. 3b     eine dreidimensionale Ansicht 300b des 3D-Eingabegeräts 102 nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist, mit einem Koordinatensystem, in dem die sechs Freiheitsgrade x,y,z und $\varphi_x, \varphi_y, \varphi_z$ des 3D-Eingabegeräts und deren erste und zweite zeitliche Ableitungen $\dot{x},\dot{y},\dot{z}$ und $\dot{\varphi}_x,\dot{\varphi}_y,\dot{\varphi}_z$ sowie $\ddot{x},\ddot{y},\ddot{z}$ und $\ddot{\varphi}_x, \ddot{\varphi}_y, \ddot{\varphi}_z$ eingezeichnet sind,

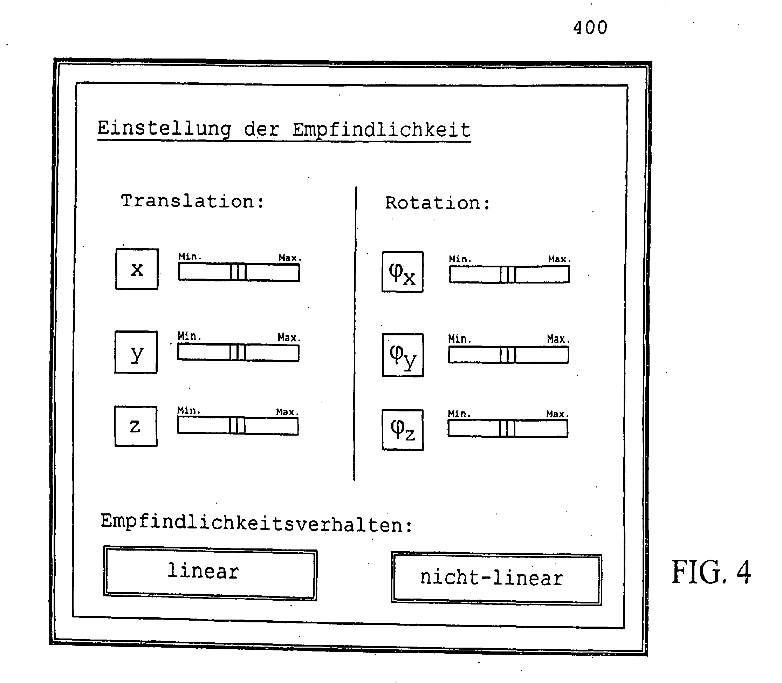

FIG. 4     ein Fenster 400 der Anzeigevorrichtung 107 mit integriertem Touchscreen zur Einstellung der Empfindlichkeitsstufen des 3D-Eingabegeräts 102 für Translationsbewegungen virtueller Objekte in x- ,y- bzw. z-Richtung sowie für Rotationsbewegungen virtueller Objekte in $\varphi_x$-, $\varphi_y$- bzw. $\varphi_z$-Richtung, wobei zwischen linearem und nicht-linearem Empfindlichkeitsverhalten unterschieden werden kann,

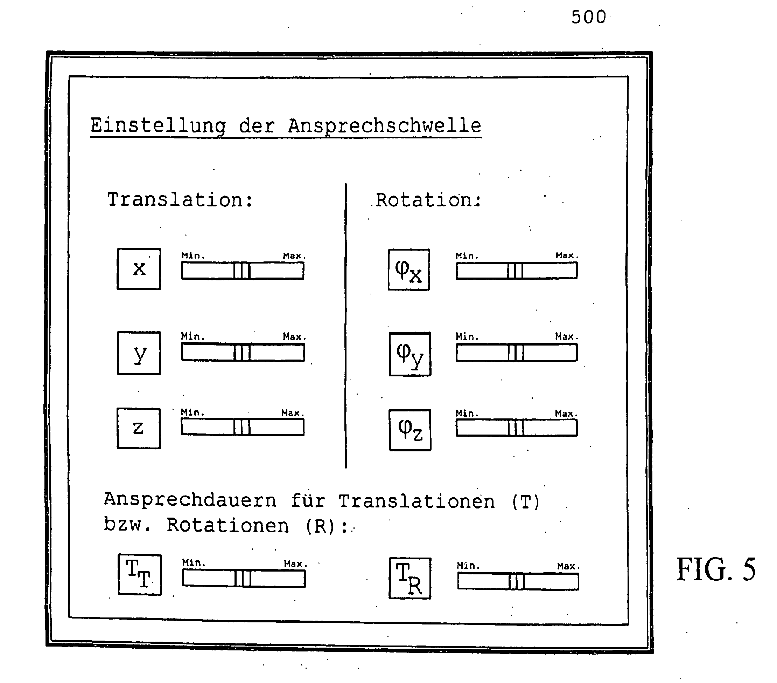

FIG. 5     ein Fenster 500 der Anzeigevorrichtung 107 mit integriertem Touchscreen zur Einstellung der Ansprechschwellen des 3D-Eingabegeräts 102 für Translationsbewegungen virtueller Objekte in x- ,y- bzw. z-Richtung, für Rotationsbewegungen virtueller Objekte in $\varphi_x$-, $\varphi_y$- bzw. $\varphi_z$-Richtung sowie zur Einstellung der Ansprechdauern des 3D-Eingabegeräts 102 für Translationsbzw. Rotationsbewegungen und

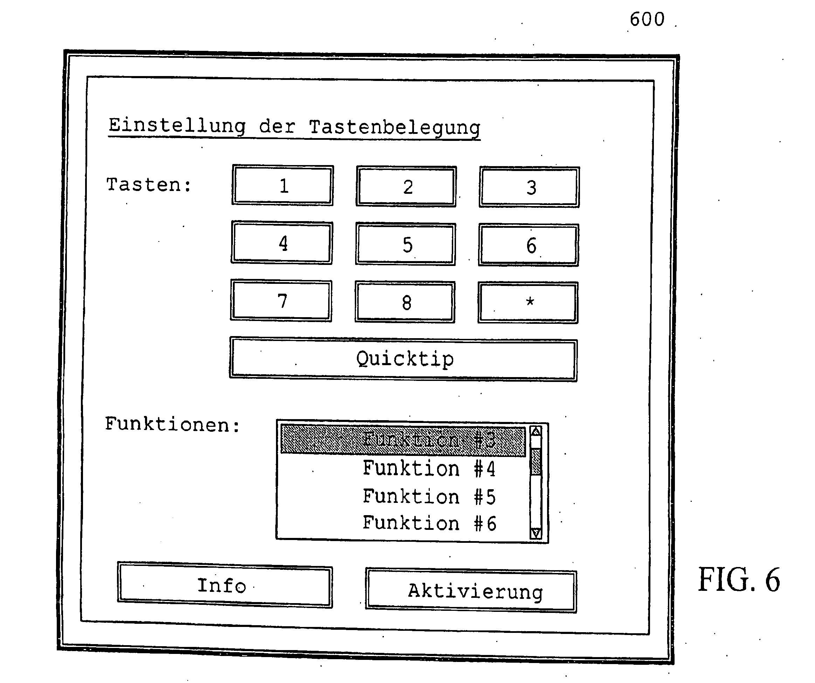

FIG. 6     ein Fenster 600 der Anzeigevorrichtung 107 mit integriertem Touchscreen zur Einstellung der Tastenbelegung für die neun Tasten des 3D-Eingabegeräts 102 und den Quicktip® Softkey mit Funktionen aus einem Auswahlfenster durch Betätigung einer Informations- und einer Aktivierungstaste.

## DETAILLIERTE BESCHREIBUNG DER ERFINDUNG

Im Folgenden werden die Funktionen der in dem bevorzugten Ausführungsbeispiel der vorliegenden Erfindung enthaltenen Baugruppen, wie in den Figuren 1a bis 6 abgebildet, näher beschrieben. Dabei soll zunächst der Aufbau und die mechanischen Bestandteile eines 3D-Eingabegeräts mit Touchscreen gemäß zwei Ausführungsbeispielen der vorliegenden Erfindung erläutert werden.

Das erfindungsgemäße 3D-Eingabegerät umfasst dabei die folgenden Komponenten:

- ein Bedienteil 104, das mittelbar (d.h. ohne direkten Zugriff) oder unmittelbar (direkter Zugriff) mit wenigstens einem Finger oder einer Hand des Benutzers manipuliert werden kann,

- eine Basisplatte 106, auf der das Bedienteil 104 in drei Achsen beweglich gelagert ist, um zu jedem Zeitpunkt t

$$\text{Kräfte } \bar{F}(t) := F_x(t)\cdot\bar{e}_x + F_y(t)\cdot\bar{e}_y + F_z(t)\cdot\bar{e}_z \ [N]$$

und

$$\text{Drehmomente } \bar{M}(t) := M_x(t)\cdot\bar{e}_x + M_y(t)\cdot\bar{e}_y + M_z(t)\cdot\bar{e}_z \ [Nm]$$

mit Komponenten $F_x(t)$, $F_y(t)$, $F_z(t)$, $M_x(t)$, $M_y(t)$ und $M_z(t)$ in Richtung der Einheitsvektoren $\bar{e}_x$, $\bar{e}_y$ und $\bar{e}_z$ eines dreidimensionalen Koordinatensystems mit den Achsen x, y und z aufzunehmen sowie

- Funktionstasten 106a, die vom Benutzer frei programmiert werden können.

Bewegungssignale des Benutzers mit bis zu drei translatorischen Freiheitsgraden x, y bzw. z und/oder bis zu drei rotatorischen Freiheitsgraden $\varphi_x$, $\varphi_y$ bzw. $\varphi_z$ werden dabei interpretiert als Ansteuersignale 114 vom Bedienteil 104 zur Basisplatte 106.

Figur 1a zeigt ein vereinfachtes Blockdiagramm 100a nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist. Im Gegensatz dazu zeigt Figur 1b ein vereinfachtes Blockdiagramm 100b nach einem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist. Mit Hilfe des Touchscreens kann eine Programmierung der Funktionstasten 106a ermöglicht werden.

Bezugnehmend auf die beiden Blockdiagramme 200a und 200b in den Figuren 2a bzw. 2b, sollen im Folgenden die Komponenten des 3D-Eingabegeräts 102 sowie die zwischen diesen Komponenten ausgetauschten Signale nach dem bevorzugten ersten und dem zweiten Ausführungsbeispiel der zugrunde liegenden Erfindung näher erläutert werden.

In Figur 2a ist ein detailliertes Blockdiagramm 200a zur Veranschaulichung der Komponenten des 3D-Eingabegeräts 102 sowie der zwischen diesen Komponenten ausgetauschten Signale 110a+b und 112a+b nach dem bevorzugten ersten Ausführungsbeispiel der zugrunde liegenden Erfindung dargestellt, bei dem eine Anzeigevorrichtung mit Touchscreen 107 in die Oberseite der Basisplatte 106 integriert ist.

Figur 2b zeigt ein detailliertes Blockdiagramm 200b zur Veranschaulichung der Komponenten des 3D-Eingabegeräts 102 sowie der zwischen diesen Komponenten ausgetauschten Signale 110a+b und 112a+b nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist.

Um eine Kommunikation zwischen dem Bedienteil 104 und der Basisplatte 106 zu ermöglichen, sind beide Komponenten über eine Eingabe-/Ausgabe-Schnittstelle zum Austausch von Ansteuersignalen 114 miteinander verbunden, die in den Figuren 2a und 2b nicht eingezeichnet ist. Das 3D-Eingabegerät 102 verfügt darüber hinaus über eine Schnittstelle 116 zu einem Computer. Über die Eingabevorrichtung mit Touchscreen 107 eingegebene Programmierungen werden als Programmiersignale 110b an einen Mikroprozessor 106b, der in der Basisplatte 106 integriert ist, geschickt und gelangen als Ansteuersignale 112b zum Programmiersignaleingang der Funktionstasten 106a. In umgekehrter Richtung werden Datensignale 112a vom Datensignalausgang der Funktionstasten 106a an den Mikroprozessor 106b geschickt, sofern Eingaben durch den Benutzer vorgenommen wurden. Sie gelangen als Datensignale 110a zum Signaleingang der Anzeigevorrichtung mit Touchscreen 107, um dort angezeigt bzw. graphisch visualisiert zu werden.

Bei entsprechender Ansteuerung durch den Benutzer ist dieses 3D-Eingabegerät 102 in der Lage, Ansteuersignale 108 für sechs voneinander unabhängige Freiheitsgrade zu erzeugen, Diese umfassen drei translatorische Freiheitsgrade, die im Folgenden als x, y und z bezeichnet werden, sowie drei rotatorische Freiheitsgrade, die im Folgenden als $\varphi_x$, $\varphi_y$ und $\varphi_z$ bezeichnet werden. Dabei kennzeichnen die Variablen x, y und z die orthogonalen Achsen eines dreidimensionalen kartesischen Koordinatensystems. Werden diese Variablen in Vektorschreibweise zusammengefasst, so ergeben sich zu jedem diskreten Zeitpunkt n (nach Weglassen der Einheiten):

$$\text{der Ortsvektor } \vec{x}(n) := [x(n),y(n),z(n)]^T \in \mathbb{R}^3$$

und

$$\text{der Drehrichtungsvektor } \vec{\varphi}(n) := [\varphi_x(n),\varphi_y(n),\varphi_z(n)]^T \in \mathbb{R}^3.$$

Selbstverständlich können z.B. mit Hilfe von Tastensteuerungen oder Schaltern verhältnismäßig einfach noch weitere Freiheitsgrade hinzugefügt werden. Dabei ist anzumerken, dass Schalter bzw. Tasten in der Regel binäre Ansteuersignale (Ein/Aus) erzeugen, wohingegen die oben genannten drei translatorischen Freiheitsgrade x, y bzw. z bzw. die drei rotatorischen Freiheitsgrade $\varphi_x$, $\varphi_y$ bzw. $\varphi_z$ jeweils analoge Ansteuersignale ergeben können, die dann beispielsweise bei byte-weiser Kodierung in $2^8 = 256$ Stufen als digitale Signale zur weiteren Verarbeitung zur Verfügung stehen.

Da die drei translatorischen und die drei rotatorischen Freiheitsgrade x, y, z, $\varphi_x$, $\varphi_y$ bzw. $\varphi_z$ als "Analogsignale" bzw. in 256 Stufen quantisierte digitale Signale aufzufassen sind, kann gemäß der vorliegenden Erfindung auch die zeitliche Veränderung dieser Ansteuersignale 108 durch die weiter unten dann näher beschriebene frei spezifizierbare Echtzeit-Steuerung 102 für animierte Grafiken, Video- und/oder Audiosequenzen ausgewertet werden. Insbesondere ist es also möglich, zu jedem diskreten Zeitpunkt n (nach Weglassen der Einheiten) die dreidimensionalen Vektoren für

$$\text{die Geschwindigkeit } \vec{v}(n) := [\dot{x}(n),\dot{y}(n),\dot{z}(n)]^T \in \mathbb{R}^3,$$

$$\text{die Beschleunigung } \vec{a}(n) := [\ddot{x}(n), \ddot{y}(n), \ddot{z}(n)]^T \in \wp^3,$$

$$\text{die Winkelgeschwindigkeit } \vec{\omega}(n) := [\dot{\varphi}_x(n), \dot{\varphi}_y(n), \dot{\varphi}_z(n)]^T \in \wp^3$$

sowie

$$\text{die Winkelbeschleunigung } \vec{\alpha}(n) := [\ddot{\varphi}_x(n), \ddot{\varphi}_y(n), \ddot{\varphi}_z(n)]^T \in \wp^3$$

der Freiheitsgrade x, y, z, $\varphi_x$, $\varphi_y$ bzw. $\varphi_z$ zu erfassen und gegebenenfalls als weitere Freiheitsgrade unabhängig von dem Absolutwert der jeweiligen Ansteuersignale 108 zu verwerten. Dabei sind seitens des Eingabegeräts 102 keine weiteren Sensoren (z.B. Geschwindigkeits- bzw. Beschleunigungssensoren) notwendig.

In Figur 3a ist eine dreidimensionale Ansicht 300a des 3D-Eingabegeräts 102 nach dem bevorzugten ersten Ausführungsbeispiel der zugrunde liegenden Erfindung mit einem 3D-Koordinatensystem abgebildet, in dem die sechs Freiheitsgrade

$$x, y, z \ [m] \text{ und } \varphi_x, \varphi_y, \varphi_z \ [rad]$$

des 3D-Eingabegeräts 102 sowie deren erste und zweite zeitliche Ableitungen

$$\dot{x}, \dot{y}, \dot{z} \ [m \cdot s^{-1}] \text{ und } \dot{\varphi}_x, \dot{\varphi}_y, \dot{\varphi}_z \ [rad \cdot s^{-1}]$$

sowie

$$\ddot{x}, \ddot{y}, \ddot{z} \ [m \cdot s^{-2}] \text{ und } \ddot{\varphi}_x, \ddot{\varphi}_y, \ddot{\varphi}_z \ [rad \cdot s^{-2}]$$

eingezeichnet sind. Bei dem skizzierten 3D-Eingabegerät 102 handelt es sich um ein modifiziertes Modell der Space-Mouse® "Classic" der Firma LogiCad3D GmbH mit insgesamt neun frei programmierbaren Funktionstasten, bei dem erfindungsgemäß ein Touchscreen 107 in die Oberseite der Basisplatte 106 integriert ist.

In analoger Weise zeigt Figur 3b eine dreidimensionale Ansicht 300b des 3D-Eingabegeräts 102 nach dem zweiten Ausführungsbeispiel der zugrunde liegenden Erfindung mit einem 3D-Koordinatensystem, in dem die genannten sechs Freiheitsgrade des 3D-Eingabegeräts 102 sowie deren erste und zweite zeitliche Ableitungen eingezeichnet sind. Wieder handelt es sich bei dem skizzierten 3D-Eingabegerät 102 um ein modifiziertes Modell der SpaceMouse® "Classic" der Firma LogiCad3D GmbH mit insgesamt neun frei programmierbaren Funktionstasten, bei dem erfindungsgemäß ein Touchscreen 107 in die Oberseite des Bedienteils 104 integriert ist.

Durch manuelle Eingaben über den Touchscreen der Anzeigevorrichtung 107 ist es erfindungsgemäß möglich, die Empfindlichkeit des 3D-Eingabegeräts für Bewegungen mit bis zu drei translatorischen und/oder drei rotatorischen Freiheitsgraden in jeweils 600 Stufen individuell einzustellen. In gleicher Weise können mit Hilfe des Touchscreens der Anzeigevorrichtung 107 erfindungsgemäß auch die Ansprechschwellen sowie die Ansprechdauern des 3D-Eingabegeräts 102 für translatorische und/oder rotatorische Bewegungen virtueller Objekte individuell eingestellt werden.

Figur 4 zeigt ein Fenster 400 der Anzeigevorrichtung 107 mit integriertem Touchscreen zur Einstellung der Empfindlichkeit des 3D-Eingabegeräts 102 für Translationsbewegungen virtueller Objekte in x- ,y- bzw. z-Richtung sowie für Rotationsbewegungen virtueller Objekte in $\varphi_x$-, $\varphi_y$- bzw. $\varphi_z$-Richtung. Die Empfindlichkeit kann dabei durch ein Betätigen der entsprechenden Softkeys und Schieberegler verändert und an die Arbeitsweise des Benutzers individuell angepasst werden. Mit Hilfe zweier zusätzlicher Softkeys kann zwischen linearem und nicht-linearem Empfindlichkeitsverhalten unterschieden werden. Insgesamt stehen zur Einstellung der Empfindlichkeit 600 Empfindlichkeitsstufen zur Verfügung.

In Figur 5 ist ein Fenster 500 der Anzeigevorrichtung 107 mit integriertem Touchscreen zur Einstellung der Ansprechschwellen des 3D-Eingabegeräts 102 für Translationsbewegungen virtueller Objekte in x- ,y- bzw. z-Richtung sowie Rotationsbewegungen virtueller Objekte in $\varphi_x$-, $\varphi_y$- bzw. $\varphi_z$-Richtung skizziert. Die Ansprechschwellen können dabei durch ein Betätigen der entsprechenden Softkeys und Schieberegler verändert und an die Arbeitsweise des Benutzers individuell angepasst werden. Darüber hinaus sind in diesem Fenster zwei weitere Softkeys vorgesehen, mit deren Hilfe eine Einstellung der Ansprechdauern des 3D-Eingabegeräts 102 für Translations- bzw. Rotationsbewegungen virtueller Objekte individuell vorgenommen werden kann.

In Figur 6 ist ein Fenster 600 der Anzeigevorrichtung 107 mit integriertem Touchscreen zur Einstellung der Tastenbelegung für die neun Tasten des 3D-Eingabegeräts 102 und den Quicktip® Softkey abgebildet. Die Zuordnung von technischen Funktionen zu bestimmten Funktionstasten 106a des 3D-Eingabegeräts 102 kann dabei beispielsweise durch ein Betätigen der auf die Nummern der Funktionstasten 106a des 3D-Eingabegeräts 102 verweisenden Softkeys und eine Auswahl von Funktionen aus einem scrollbaren Menü erfolgen. Eine Zuordnung gilt dabei als programmiert, wenn die Aktivierungstaste betätigt wurde. Mit Hilfe der Informationstaste kann der Benutzer nähere Informationen zu den Eigenschaften ausgewählter Funktionen bekommen, die auf Wunsch in einem weiteren Fenster der Anzeigevorrichtung 107 angezeigt werden.

Die Bedeutung der mit Bezugszeichen versehenen Symbole in den Figuren 1a bis 6 kann der beigefügten Bezugszeichenliste entnommen werden.

Bezugszeichenliste

| Nr. | Symbol |
|---|---|
| 100a | vereinfachtes Blockdiagramm zur Veranschaulichung der zwischen dem 3D-Eingabegerät 102 und der Basisplatte 106 ausgetauschten Datensignale 110a bzw. Programmiersignale 110b nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist |
| 100b | vereinfachtes Blockdiagramm zur Veranschaulichung der innerhalb des 3D-Eingabegeräts 102 zwischen dem Bedienteil 104 und der Anzeigevorrichtung mit Touchscreen 107 ausgetauschten Datensignale 110a bzw. Programmiersignale 110b nach einem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist |
| 102 | 3D-Eingabegerät zur Eingabe der Ansteuersignale 108 |
| 103 | Kabelanschluss zu einem Computer |
| 104 | Bedienteil des 3D-Eingabegeräts 102 |
| 106 | Basisplatte des 3D-Eingabegeräts 102 |
| 106a | Funktionstasten der Basisplatte 106 |
| 106b | Mikroprozessor ($\mu$P), integriert in die Basisplatte 106 des 3D-Eingabegeräts 102 |
| 107 | Anzeigevorrichtung mit Touchscreen, integriert in die Basisplatte 106 oder das Bedienteil 104 des 3D-Eingabegeräts 102 |
| 108 | Ansteuersignale von der Basisplatte 106 des 3D-Eingabegeräts 102 zu einem angeschlossenen Computer |
| 110a | Datensignale vom Signalausgang des Mikroprozessors 106b zum Signaleingang der Anzeigevorrichtung mit Touchscreen 107 zur Steuerung der Anzeige |
| 110b | Programmiersignale vom Signalausgang der Anzeigevorrichtung mit Touchscreen 107 zum Signaleingang des Mikroprozessors 106b zur Programmierung der Funktionstasten 106a durch den Benutzer |
| 112a | Datensignale vom Datensignalausgang der Funktionstasten 106a zum Signaleingang des Mikroprozessors 106b zur Steuerung von Funktionen durch den Benutzer |
| 112b | Ansteuersignale vom Signalausgang des Mikroprozessors 106b zum Programmiersignaleingang der Funktionstasten 106a zur Programmierung der Funktionstasten 106a |

| Nr. | Symbol |
|---|---|
| 114 | Bewegungssignale des Benutzers mit bis zu drei translatorischen Freiheitsgraden x,y,z [m] und/oder bis zu drei rotatorischen Freiheitsgraden $\varphi_x,\varphi_y,\varphi_z$ [rad], interpretiert als Ansteuersignale vom Bedienteil 104 zur Basisplatte 106 |
| 116 | Signalausgang des 3D-Eingabegeräts 102 für Ansteuersignale 108 vom 3D-Eingabegerät 102 zu einem Computer |
| 118 | (gedachte) vertikale Längsachse des Bedienteils 104 |
| 200a | detailliertes Blockdiagramm zur Veranschaulichung der Komponenten sowie der Ein- und Ausgabesignale des 3D-Eingabegeräts 102 und der Basisplatte 106 nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist |
| 200b | detailliertes Blockdiagramm zur Veranschaulichung der Komponenten sowie der Ein- und Ausgabesignale des 3D-Eingabegeräts 102 und der Basisplatte 106 nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist |
| 300a | dreidimensionale Ansicht des 3D-Eingabegeräts 102 und der Basisplatte 106 mit einem 3D-Koordinatensystem, in dem die sechs Freiheitsgrade x,y,z [m] und $\varphi_x,\varphi_y,\varphi_z$ [rad], des 3D-Eingabegeräts 102 sowie deren erste und zweite zeitliche Ableitungen $\dot{x},\dot{y},\dot{z}$ [m·s$^{-1}$] und $\dot{\varphi}_x,\dot{\varphi}_y,\dot{\varphi}_z$ [rad·$^{-1}$] sowie $\ddot{x},\ddot{y},\ddot{z}$ [m·s$^{-2}$] und $\ddot{\varphi}_x,\ddot{\varphi}_y,\ddot{\varphi}_z$ [rad·$^{-2}$], eingezeichnet sind |
| 300b | dreidimensionale Ansicht des 3D-Eingabegeräts 102 nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist |
| 400 | Fenster der Anzeigevorrichtung 107 mit integriertem Touchscreen zur Einstellung der Empfindlichkeitsstufen des 3D-Eingabegeräts 102 für Translationsbewegungen virtueller Objekte in x- ,y- bzw. z-Richtung sowie für Rotationsbewegungen virtueller Objekte in $\varphi_x$-, $\varphi_y$- bzw. $\varphi_z$-Richtung, wobei zwischen linearem und nicht-linearem Empfindlichkeitsverhalten unterschieden werden kann |
| 500 | Fenster der Anzeigevorrichtung 107 mit integriertem Touchscreen zur Einstellung der Ansprechschwellen des 3D-Eingabegeräts 102 für Translationsbewegungen virtueller Objekte in x-, y- bzw. z-Richtung, für Rotationsbewegungen virtueller Objekte in $\varphi_x$-, $\varphi_y$- bzw. $\varphi_z$-Richtung sowie zur Einstellung der Ansprechdauern des 3D-Eingabegeräts 102 für Translations- bzw. Rotationsbewegungen |
| 600 | Fenster der Anzeigevorrichtung 107 mit integriertem Touchscreen zur Einstellung der Tastenbelegung für die neun Tasten des 3D-Eingabegeräts 102 und den Quicktip® Softkey mit Funktionen aus einem Auswahlfenster durch Betätigung einer Informations- und einer Aktivierungstaste |

**Patentansprüche**

1. 3D-Eingabegerät zur Erzeugung von Ansteuerdaten (108) in drei rotatorischen und drei translatorischen Freiheitsgraden für elektronische oder elektrische Geräte, aufweisend:

   - ein Bedienteil (104), das derart ausgebildet ist, dass es mittelbar oder unmittelbar durch wenigstens einen Finger oder eine Hand des Benutzers manipulierbar ist,
   - eine Basisplatte (106), auf deren Oberseite das Bedienteil (104) angeordnet ist und bezüglich der das Bedienteil (104) beweglich gelagert ist, wobei Relativbewegungen zwischen dem Bedienteil (104) und der Basisplatte (106) in drei rotatorischen und drei translatorischen Freiheitsgraden zur Erzeugung der Ansteuerdaten (108) für die elektronischen oder elektrischen Geräte ausgewertet werden, und
   - eine Anzeigevorrichtung (107), die in die Oberseite der Basisplatte (106) integriert ist,

*dadurch gekennzeichnet, dass*
*die Anzeigevorrichtung (107) im Wesentlichen senkrecht zu der Längsachse des Bedienteils (104) ange-*
*ordnet ist, wobei die Längsachse die Richtung ist, in der das Bedienteil von der Basisplatte wegsteht.*

**2.** 3D-Eingabegerät nach einem der vorhergehenden Ansprüche,
**dadurch gekennzeichnet,**
**dass** es einen Mikroprozessor (106b) aufweist, der die Anzeige auf der Anzeigevorrichtung (107) steuert.

**3.** 3D-Eingabegerät nach einem der vorhergehenden Ansprüche,
**dadurch gekennzeichnet,**
**dass** es Funktionstasten (106a) aufweist, durch die Signale erzeugbar sind, die auf der Anzeigevorrichtung (107) angezeigt bzw. graphisch visualisiert werden.

**4.** 3D-Eingabegerät nach einem der vorhergehenden Ansprüche,
**dadurch gekennzeichnet,**
**dass** die Funktionstasten vom Benutzer frei programmierbar sind.

**5.** 3D-Eingabegerät nach einem der vorhergehenden Ansprüche,
**dadurch gekennzeichnet,**
**dass** die Funktionstasten schematisiert (Fig. 6) auf der Anzeigevorrichtung (107) darstellbar sind.

**6.** 3D-Eingabegerät nach einem der vorhergehenden Ansprüche,
**dadurch gekennzeichnet,**
**dass** die Basisplatte (106) zur Auflage auf eine Arbeitsunterlage dient.

**7.** 3D-Eingabegerät nach einem der vorhergehenden Ansprüche,
**dadurch gekennzeichnet,**
**dass** es eine Schnittstelle (116) zur drahtlosen Übertragung von Ansteuerdaten (108) zu einem elektrischen oder elektronischen Gerät aufweist.

**Claims**

**1.** 3D input device to generate drive data (108) in three rotary and three translatory degrees of freedom for electronic or electrical devices, comprising:

- an operating part (104) which is designed so that it can be manipulated indirectly or directly by at least one finger or hand of the user,
- a base plate (106), on the upper side of which the operating part (104) is arranged and relative to which the operating part (104) is mounted so that it can be moved, relative movements between the operating part (104) and the base plate (106) in three rotary and three translatory degrees of freedom being evaluated in order to generate the drive data (108) for the electronic or electrical devices, and
- a display instrument (107) which is integrated into the upper side of the base plate (106),

*characterised* in that
*the display instrument (107) is arranged essentially perpendicularly to the longitudinal axis of the operating part (104), the longitudinal axis being the direction in which the operating part protrudes from the base plate.*

**2.** 3D input device according to one of the preceding claims,
**characterised in that**,
it comprises a microprocessor (106b) which controls the display on the display instrument (107).

**3.** 3D input device according to one of the preceding claims,
**characterised in that**,
it comprises function keys (106a) by which signals can be generated which are displayed or graphically visualised on the display instrument (107).

**4.** 3D input device according to one of the preceding claims,

**characterised in that**,
the function keys are freely programmable by the user.

5. 3D input device according to one of the preceding claims,
**characterised in that**,
the function keys can be represented in a schematised way (Fig. 6) on the display instrument (107).

6. 3D input device according to one of the preceding claims,
**characterised in that**,
the base plate (106) is used for resting on a working document.

7. Device according to one of the preceding claims,
**characterised in that**,
it comprises an interface (116) for the wireless transmission of drive data (108) to an electrical or electronic device.


**Revendications**

1. Appareil d'entrée 3D pour la génération de données de commande (108) selon trois degrés de liberté de rotation et trois degrés de liberté de translation pour des appareils électroniques ou électriques, comportant :

   - un organe de contrôle (104) formé de manière à ce qu'il puisse être directement ou indirectement manipulé par l'intermédiaire d'au moins un doigt ou une main de l'utilisateur,
   - une plaque de base (106) à la face supérieure de laquelle est disposé l'organe de contrôle (104) et par rapport à laquelle l'organe de contrôle (104) est logé de façon mobile, dans lequel des mouvements relatifs entre l'organe de contrôle (104) et la plaque de base (106), selon trois degrés de liberté de rotation et trois degrés de liberté de translation, sont exploités pour générer les données de commande (108) pour les appareils électroniques ou électriques, et
   - un dispositif d'affichage (107) intégré dans la face supérieure de la plaque de base (106),

   **caractérisé en ce que**
   le dispositif d'affichage(107) est disposé sensiblement perpendiculairement à l'axe longitudinal de l'organe de contrôle (104), où l'axe longitudinal est la direction dans laquelle l'organe de contrôle s'éloigne de la plaque de base.

2. Appareil d'entrée 3D selon l'une des revendications précédentes, **caractérisé en ce qu'**il comporte un microprocesseur (106b) qui contrôle l'affichage sur le dispositif d'affichage (107).

3. Appareil d'entrée 3D selon l'une des revendications précédentes, **caractérisé en ce qu'**il comporte des touches de fonction (106a) par l'intermédiaire desquelles des signaux, qui sont indiqués ou visualisés graphiquement sur le dispositif d'affichage (107), peuvent être générés.

4. Appareil d'entrée 3D selon l'une des revendications précédentes, **caractérisé en ce que** les touches de fonction sont librement programmables par l'utilisateur.

5. Appareil d'entrée 3D selon l'une des revendications précédentes, **caractérisé en ce que** les touches de fonction peuvent être représentées schématiquement (fig. 6) sur le dispositif d'affichage (107).

6. Appareil d'entrée 3D selon l'une des revendications précédentes, **caractérisé en ce que** la plaque de base (106) sert pour la pose sur un support de travail.

7. Appareil d'entrée 3D selon l'une des revendications précédentes, **caractérisé en ce qu'**il comporte une interface (116) pour la transmission sans fil de données de commande (108) vers un appareil électrique ou électronique.

106 — Basisplatte

107 — | Anzeige mit Touchscreen |

108 ⇒ Anschluss an einen Computer

114 ⬆

| Bedienteil | — 104

3D-Eingabegerät

102

EP 1 513 056 B1

FIG. 1a

100b

```
┌─────────────────────────────┐
│  ┌───────────────────┐       │
│  │   Anzeige mit     │── 107 │
│  │   Touchscreen     │       │
│  │                   │       │
│  │   Bedienteil      │── 104 │
│  └───────────────────┘       │
│                              │
│           ▼ 114              │
│                              │
│  ┌───────────────────┐  108  │    Anschluss an
│  │   Basisplatte     │──► ►   │    einen Computer
│  └───────────────────┘       │
│  106                         │
│           3D-                │
│       Eingabegerät           │
└─────────────────────────────┘
            102
```

FIG. 1b

```
┌─────────────────────────────────────────────────┐      200a
│   ┌─────────────────────────────────────────┐    │
│   │            Basisplatte                   │    │
│   │                                          │    │
│   │  ┌──────────┐   110a   ┌──────────────┐  │    │
│   │  │  Mikro-  │ ───────► │ Anzeige mit  │  │    │
106b──► │Prozessor │ ◄─────── │ Touchscreen  │  │──────107
│   │  └──────────┘   110b   └──────────────┘  │    │
│   │     ▲  │                                 │    │
│   │     │  │   112b                          │──────106
│   │     │  │ ───────────────┐                │    │
│   │  112a│  │               │       116      │    │  108
│   │     │  ▼               ▼        ┐        │    │   ═►  Anschluss an
│   │  ┌──────────────────┐          ▓ ═►      │    │       einen Computer
106a──► │  Funktions-     │ ──────────►        │    │
│   │  │   tasten         │                    │    │
│   │  └──────────────────┘                    │    │
│   └─────────────────────────────────────────┘    │
│                    ▲                              │
│               114  ║                              │
│                    ║                              │
│   ┌─────────────────────────────────────────┐    │
│   │                                          │────── 104
│   │            Bedienteil                    │    │
│   │                                          │    │
│   └─────────────────────────────────────────┘    │
│                                                   │
│            3D-Eingabegerät                        │   FIG. 2a
└─────────────────────────────────────────────────┘
                      102
```

EP 1 513 056 B1

200b

Basisplatte

106b — Mikro-Prozessor

112b

112a

106a

106

116

108

Funktions-tasten

Anschluss an einen Computer

110a

110b

114

107 — Anzeige mit Touchscreen

104

Bedienteil

3D-Eingabegerät

102

FIG. 2b

FIG. 3a

FIG. 3b

300b

106

106a

107

118

118

104

102

103

106a

$y, \dot{y}, \ddot{y}$
$\varphi_y, \dot{\varphi}_y, \ddot{\varphi}_y$

$x, \dot{x}, \ddot{x}$
$\varphi_x, \dot{\varphi}_x, \ddot{\varphi}_x$

$z, \dot{z}, \ddot{z}$
$\varphi_z, \dot{\varphi}_z, \ddot{\varphi}_z$

**Einstellung der Empfindlichkeit**

Translation:                          Rotation:

| x |   Min. ——— Max.          | $\varphi_x$ |   Min. ——— Max.

| y |   Min. ——— Max.          | $\varphi_y$ |   Min. ——— Max.

| z |   Min. ——— Max.          | $\varphi_z$ |   Min. ——— Max.

Empfindlichkeitsverhalten:

| linear |          | nicht-linear |

FIG. 4

EP 1 513 056 B1

EP 1 513 056 B1

## Einstellung der Ansprechschwelle

Translation:                          Rotation:

| $x$ |  Min. ▮▮ Max.
| $y$ |  Min. ▮▮ Max.
| $z$ |  Min. ▮▮ Max.

| $\varphi_x$ |  Min. ▮▮ Max.
| $\varphi_y$ |  Min. ▮▮ Max.
| $\varphi_z$ |  Min. ▮▮ Max.

Ansprechdauern für Translationen (T)
bzw. Rotationen (R):

| $T_T$ |  Min. ▮▮ Max.        | $T_R$ |  Min. ▮▮ Max.

FIG. 5

EP 1 513 056 B1

## Einstellung der Tastenbelegung

Tasten:

| | | |
|:---:|:---:|:---:|
| 1 | 2 | 3 |
| 4 | 5 | 6 |
| 7 | 8 | * |

Quicktip

Funktionen:

Funktion #3
Funktion #4
Funktion #5
Funktion #6

Info          Aktivierung

FIG. 6